(19) Europäisches Patentamt

European Patent Office

Office européen des brevets

(11) **EP 1 710 116 A2**

(12) **EUROPEAN PATENT APPLICATION**

(43) Date of publication:
**11.10.2006 Bulletin 2006/41**

(51) Int Cl.:
***B60M 1/12*** (2006.01)

(21) Application number: **06112240.4**

(22) Date of filing: **05.04.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **07.04.2005 IT MI20050586**

(71) Applicant: **Mont-Ele S.r.l.**
**20034 Giussano MI (IT)**

(72) Inventors:
• **Gorla, Fausto**
**20147 Milano (IT)**
• **Maggioni, Fabrizio**
**20034 Giussano, MI (IT)**
• **Pedani, Paolo**
**20058 Villasanta, MI (IT)**

(74) Representative: **Modiano, Micaela Nadia**
**Dr. Modiano & Associati S.p.A.**
**Via Meravigli 16**
**20123 Milano (IT)**

(54) **Apparatus and method for measuring the position of the contact line, in the railroad sector, with respect to the center of the collection bow**

(57) An apparatus for determining the position of the railroad contact line with respect to the center of the contact bar (3) of a pantograph of a railroad vehicle (1), comprising first and second means suitable to detect a force ($F_A$, $F_B$) that acts respectively on the ends of the contact bar (3), the first and second means being arranged respectively at the first and second ends of the contact bar (3); and processing means adapted to calculate, from the detected forces, the position of the contact line with respect to the center of the contact bar (3).

Fig. 1

## Description

The present invention relates to an apparatus and a method for measuring the position of the contact line, particularly in the railroad sector, with respect to the center of the bow or contact bar that makes contact with the contact line.

As it is known, electric power-driven tram and railroad lines are provided with one or two conducting copper wires, i.e., the contact line, which carries electric power for moving the vehicle on the track.

The vehicle that moves on the track collects power from the contact line by means of a copper element, known as wearing strip, which is applied rigidly to the upper part of a pantograph arranged on the roof of the railroad vehicle.

Substantially, the pantograph ends, at its upper end, with a contact bar (or bow), which is intended to make contact with the electrical contact line of the railroad. Contact between the electrical contact line of the railroad and the contact bar allows the transfer of electric power from the overhead line to the motor drive.

During travel, the contact bar slides along the contact line, resting thereon with suitable force and causing at the same time wear on both the contact line and said contact bar.

One of the important parameters to be kept under control for the railroad or tram line is the polygonal line of the line with respect to the rail plane.

Substantially, it is useful to be able to determine precisely the position of the contact line with respect to the center of the collector bow. In practice, the contact line does not have a completely rectilinear configuration, but lies along a polygonal line, the vertices of which must be determined and correspond to points where the displacement of the line changes direction.

There are technologies for calculating the polygonal line which are of the contactless type and are based on the use of optical, i.e., laser, devices.

However, the optical method is more expensive than the contact method, since it is necessary to provide additional devices, with a consequent increase in costs.

The aim of the present invention is to provide an apparatus and a method for determining the position of the contact line with respect to the center of the collector bow which allows, by means of a contact method, to obtain a precise measurement of the contact line.

Within this aim, an object of the present invention is to provide an apparatus and a method for determining the position of the contact line with respect to the center of the collector bow so as to reconstruct the polygonal line of the contact line if said position is available for the succession of points and as a function of the progressive.

Another object of the present invention is to provide an apparatus and a method for determining the position of the contact line which allows to provide added precision in the measurement of the height of the contact line, performed by means of a contact method.

Another object of the present invention is to provide an apparatus and a method which are highly reliable, relatively simple to provide and at competitive costs.

This aim and these and other objects, which will become better apparent hereinafter, are achieved by an apparatus for determining the position of a railroad contact line with respect to the center of a contact bar of a pantograph of a railroad vehicle, characterized in that it comprises first and second means adapted to detect a force that acts respectively on the ends of the contact bar, said first and second means being arranged respectively at the first and second ends of said contact bar; and processing means suitable to calculate, from said detected forces, the position of the contact line with respect to the center of said contact bar.

Further characteristics and advantages of the present invention will become better apparent from the following detailed description of a preferred but not exclusive embodiment of the apparatus and the method according to the invention, illustrated by way of non-limiting example in the accompanying drawings, wherein:

Figure 1 is a schematic view of the apparatus used for the method according to the invention, illustrating the corresponding parameters; and
Figure 2 is a schematic view of the forces involved in the method for measuring the polygonal line.

With reference to the figures, an apparatus according to the present invention for determining the position of the contact line (and therefore the polygonal line data) with respect to the center of the contact bar of the pantograph of a rail or tram vehicle, comprises, mounted on a railcar, designated schematically by the reference numeral 1 and rested on the plane of rails 2, first and second force detection means, which are constituted conveniently by load cells arranged respectively at the ends A and B of a bow or contact bar 3 and makes contact with a contact line 4.

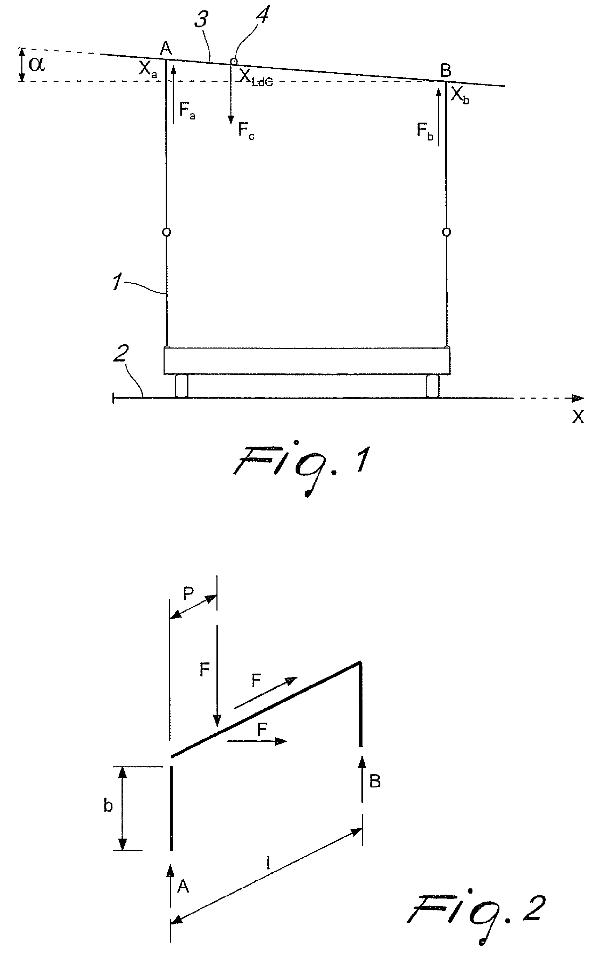

In particular, the load cells at the ends of the bow 3 are designated in Figure 1 by means of the detected forces, and therefore $F_A$ is the force detected by the load cells at the end A of the bow 3, while $F_B$ is the force detected by the load cells at the ends A and B of the bow 3.

Fc is instead the force exchanged between the contact bar 3 and the catenary wire, i.e., the contact line.

Using the rail plane 2 as the X-axis of a Cartesian coordinate system, $x_a$ designates the abscissa of the point A of the bow, $x_b$ designates the abscissa of the point B of the bow, and $x_{LdC}$ designates the abscissa of a contact line 4.

Finally, the angle formed between the bow 3 and the rail plane 2 is designated by the reference letter $\alpha$.

In practice, the collector bow 3 can be simplified as a beam, which is retained at its two ends A and B and on which there is a force at a position x to be determined (which arises from the interaction with the catenary wire and from the pushing force that the pantograph applies thereto).

The position x can be determined by measuring the forces that react against the supports of the bow. This measurement is performed by means of the load cells cited above, the measurements of which allow to obtain the required datum by means of an algorithm which is implemented in a control software.

By means of this method, one obtains the position datum of the contact line, i.e., the abscissa $X_{LdC}$ of the contact line, which is therefore the position of the contact line with respect to one end of the contact bar 3.

The advantage of the measurement described above is the fact that it is very direct and that it uses load cells which are already present on the railcar for measuring the total thrust that the pantograph applies to the contact line.

With these measurements it is possible to reconstruct the path of the line on a horizontal plane: the points where the displacement of the line changes direction are the vertices of the polygonal line that defines the path of the contact line.

The methods and characteristics of the measurement of the polygonal line are described in detail.

Consider the contact point P between the line wire 4 and the bow 3 of the pantograph.

Given three directions which form a right-handed Cartesian set (Z = travel of the railcar; X = horizontal direction with respect to the ground; Y = vertical direction), in this point these two elements exchange three forces:

a force Fx, in the direction X, which is due to the kinetic friction caused by the relative motion along the polygonal line between the bow and the wire;
a force Fy, in a direction -Y, which is due to the load applied by the pantograph to the line;
a force Fz, in a direction Z, which is due to the kinetic friction caused by the motion of the train with respect to the line.

Assume now that the bow is supported on two points A and B, at which a corresponding number of load cells are arranged which detect the force in the direction Y. The force Fx is detected by the cells related to the points A and B as a torque Fx b, i.e., by providing a balance to the moments with respect to A:B' l = Fx b, where B' is the force detected by the load cell related to the point B due only to Fx;

Fy is detected by the cells related to the points A and B as a torque Fy p, i.e., by providing a balance to the moments with respect to A:B" l = Fy p, where B" is the force detected by the load cell related to the point B due only to Fy.

By adding the two equations described above, one obtains:

B l = Fx b + Fy p, where B = B' + B" the reading of the load cell related to the point B.

Now, by setting Fy = A + B, i.e., by writing the balance of the system along the vertical plane, and using A to designate the reading performed on the load cell related to the point A, one obtains the following:

$$p = (BI)/(A+B)+Fx\ b/(A+B).$$

Considering now that Fx = fx Fy (kinetic friction relation, in which fx is the friction coefficient), one has:

$$p = (BI)/(A+B)+fx\ b$$

which represents the measurement of the position of the wire.

It should be noted that this measurement is the result of the reading of the load cells and of the estimate of the coefficient of friction between the line and the bow.

Fx is not negligible: for example, assuming that the friction coefficient between the bow and the wire is 0.15, and assuming that the distance between the line and the load cell is equal to 153 mm, one obtains an estimation error of the polygonal line of approximately 23 mm.

An additional variable involved, which can be interpreted as noise, is due to rolling, since it causes a relative motion of the bow with respect to the contact bar which is added to/subtracted from Fx.

Substantially, the apparatus and the method according to the present invention allow to measure the position of the contact line with respect to the center of the contact bar or bow of the pantograph, thus verifying in this manner also the path of the polygonal line with respect to the rail plane.

In practice it has been found that the apparatus and the method according to the invention fully achieve the intended aim and objects.

The method and apparatus thus conceived are susceptible of numerous modifications and variations, all of which are within the scope of the appended claims; further, all the details may be replaced with other technically equivalent elements.

The disclosures in Italian Patent Application No. MI2005A000586 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

**Claims**

1.  An apparatus for determining the position of a railroad contact line with respect to the center of a contact bar of a pantograph of a railroad vehicle, **characterized in that** it comprises first and second means adapted to detect a force that acts respectively on the ends of the contact bar, said first and second means being arranged respectively at the first and second ends of said contact bar; and processing means suitable to calculate, from said detected forces, the position of the contact line with respect to the center of said contact bar.

2.  The apparatus according to claim 1, **characterized in that** said first and second means suitable to detect the forces on the ends of said contact bar comprise load cells.

3.  The apparatus according to claim 1, **characterized in that** said load cells are arranged at the ends of the pantograph of said railcar.

4.  A method for determining the position of the contact line with respect to the center of the contact bar of a pantograph of a railroad or tramway vehicle, **characterized in that** it comprises the steps of:

    determining forces that act on ends of said contact bar along a direction which is perpendicular to the ground;
    determining components of said forces with respect to a direction which is horizontal with respect to the ground;
    imposing a balance of forces along a direction which is perpendicular to the ground; and
    introducing a coefficient of kinetic friction caused by a relative motion between the contact bar and the contact line; and
    determining a measurement of the position of the contact line with respect to the ends of said contact bar.

Fig.1

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT MI20050586 A